# EUROPEAN PATENT APPLICATION

(11) **EP 1 449 714 A1**
(43) Date of publication of application: **25.08.2004**
(21) Application number: 03029146.2
(22) Date of filing: 18.12.2003
(51) Int. Cl.: B60N 2/58

(54) **Lining material for the seat of a motor-vehicle**

(30) Priority: 31.01.2003 IT TO20030014 U
(71) Applicant: FIAT AUTO S.p.A., 10135 Torino (IT)
(72) Inventor: Bianco, Guido, 10045 Piossasco (Torino) (IT)
(74) Representative: Di Francesco, Gianni

(57) **Abstract**

Lining for a seat of a motor-vehicle, including a frame preferably made of a metal tube covered by a support-mat. The lining consists of superimposition of a plastic sheet incorporating a high number of air bubbles and of a double-layer fabric forming a supporting net which lets the air pass through its meshes.

## Description

The present invention refers to a light lining material for a seat of a motor-vehicle i.e. a lining realised without using the foam that is generally used for this purpose in the automotive industry. More in particular the invention refers to the lining material for the horizontal part of the seat as well as for the back of it.

Present techniques utilised in building car-seats generally take into account the need to provide seats -both in their horizontal part and their back - which are state of the art as far as thermal comfort is concerned. This implies that an important amount of air is interchanged between the surface of the seat where the person is seated and the surrounding atmosphere, so that sweating is reduced as far as possible.

Linings for car seats are already known from German patent n° DE 29901225 presenting a double layer of fabric and a coil consisting of a tube, located between the two layers. The coil is adapted to bring cold or warm air to the seat and its back, according to what the user wishes, the user having at its disposal a control device to vary the temperature of the air.

However, a lining of the type described above is not only quite expensive and difficult to produce but implies the implementation of an additional device intended to regulate the temperature of the air.

It is an object of the present invention to provide a lining for seats in motor-vehicles which overcomes the aforementioned drawbacks.

Said object is achieved by means of the present invention providing a lining presenting the characteristics set forth in claim 1.

Additional characteristics and advantages will become clear from the following description referring to the appended drawings which are provided as non-restrictive example, and in which:
- figure 1 is a schematic perspective view of a seat of a motor-vehicle, and
- figure 2 is a section view of the layers of the material forming the horizontal part of the seat in figure 1.

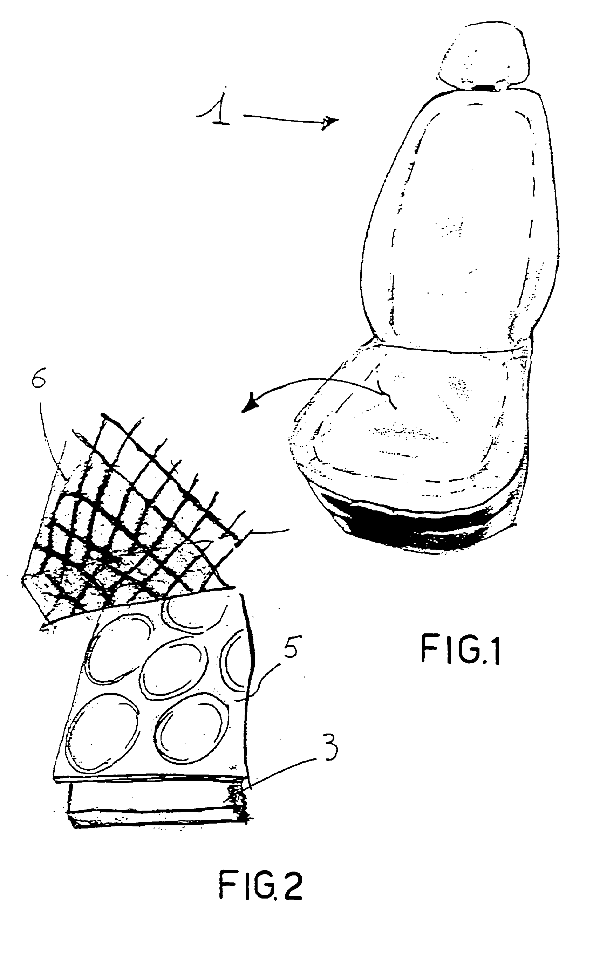

With reference to the figures, reference number 1 indicates a seat of a motor-vehicle of the type defined as "light", that is made without the foam generally used in the automotive industry. It presents a support-mat indicated by reference number 3 in figure 2, fixed to the frame (not shown) of the seat 1. Above the support-mat, the lining of the seat consists of two layers which are superimposed and coupled in a known way, for example by means of sticking. The first and lower layer consists of an plastic sheet incorporating a high number of air bubbles, of basically equal size and diameter, located at the same level, the one next to the other. This type of material for plastic sheet is very commonly used in packaging since it damps the effect of impacts and is produced by the firm BAYER.

The second 6 of the two layers consists of a double-layer fabric forming a sort of "supporting net" which lets the air pass through its meshes. This material which is used specifically for the seats of motor-vehicles, is the object of patent n° DE 19903070 by Müller Textil GmbH, Siegburg, Germany.

Tests have proven that superimposition of two layers of these different materials, that is the one with the bubbles by Bayer and the supporting net by Müller, provides excellent ventilation of the lining so that passengers feel more comfortable, especially in summer. The air can circulate inside the supporting net and pass through the spaces left between the bubbles, since the bubbles do not close these spaces even when they are compressed

The lining is therefore functional as far as ventilation is concerned and is also light, economical, and easy to produce at industrial level since no operation but assembly of the two known and common materials is required.

## Claims

1. Lining for a seat of a motor-vehicle, including a frame made of a metal tube covered by a support-mat (3), **characterised in that** it consists of two superimposed layers of known materials, the first (5) and lower layer consisting of a plastic sheet incorporating a high number of air bubbles, of basically equal size and diameter, located at the same level, and the second (6) and upper one consisting of a double-layer fabric forming supporting net which lets the air pass through its meshes.

2. Lining for the seat of a motor-vehicle as claimed in claim 1, **characterised in that** the two layers (5, 6) are coupled by means of sticking.
